Europäisches Patentamt

European Patent Office

Office européen des brevets

(11) Publication number: **0 118 912**
**B1**

## (12) EUROPEAN PATENT SPECIFICATION

(45) Date of publication of patent specification: **13.07.88**

(51) Int. Cl.⁴: **B 62 D 55/24, B 62 D 55/28**

(21) Application number: **84102640.4**

(22) Date of filing: **10.03.84**

(54) Rubber crawler.

(30) Priority: **14.03.83 JP 42011/83**

(43) Date of publication of application:
**19.09.84 Bulletin 84/38**

(45) Publication of the grant of the patent:
**13.07.88 Bulletin 88/28**

(84) Designated Contracting States:
**CH DE FR LI**

(56) References cited:
**DE-C- 457 245**
**FR-A- 667 701**
**FR-A-1 131 174**
**US-A-2 796 302**
**US-A-3 958 839**
**US-A-4 194 583**

**PATENTS ABSTRACTS OF JAPAN, vol. 6, no.
246 (M-176) 1124r, 4th December 1982; & JP - A
- 57 144 175 (OOTSUTAIYA K.K.) 06-09-1982**

(73) Proprietor: **Bridgestone Corporation
10-1, Kyobashi 1-Chome Chuo-Ku
Tokyo 104 (JP)**

(72) Inventor: **Togashi, Sumio
827 Kashio-cho Totsuka-ku
Yokohama-shi Kanagawa-ken (JP)**

(74) Representative: **Huss, Carl-Hans, Dipl.-Ing. et al
Patentanwalt Griesstrasse 3 a Postfach 14 54
D-8100 Garmisch-Partenkirchen (DE)**

Courier Press, Leamington Spa, England.

**Description**

BACKGROUND OF THE INVENTION

The present invention relates to a rubber crawler used on crawling vehicles for advancing various machines and devices such as those for construction work, and more particularly to a rubber crawler which can be put on a crawling vehicle in exchange of a metal crawler used in sites abundant in pebbles and stone pieces.

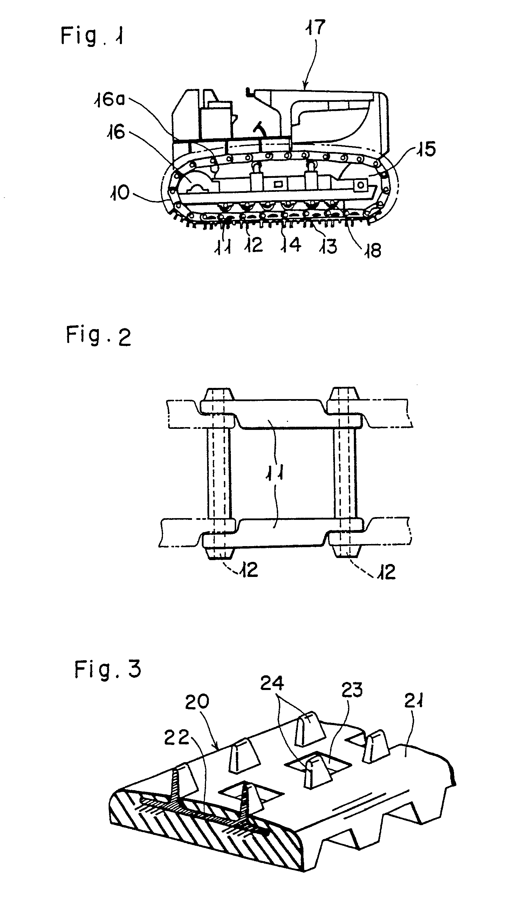

The conventional crawling vehicles suited for operation in sites abundant in pebbles are equipped with a metal crawler such as designated by numeral 10 in Figs. 1 and 2. The metal crawler 10 consists of many links 11 pivotally connected by pins 12 to form an endless belt, and outer plates 14 which possess lugs 13 and are fixed to said links 11. The metal crawler 10 thus constructed is mounted around a drived wheel 15 and a driving wheel 16. As the driving wheel 16 rotates, teeth 16a engage with the crawler 10 between the pins 12 · 12, and thereby drives the machine body 17. The weight of the machine body 17 is supported by wheels 18 which run on the upper surface of the links 11.

The crawling vehicles having a metal crawler 10 are preferable at sites abundant in pebbles and stone pieces because of their excellent towing performance; however, they may damage usual flat roads and cannot exert adequate towing power on a muddy ground. For running on flat roads or operating on a muddy ground, rubber crawlers are more appropriate than metal ones. The conventional typical rubber crawler 20 shown in Fig. 3 is generally formed of rubber into an endless body 21 which has core metal pieces 22 buried longitudinally therein at predetermined intervals. Sprocket holes 23 are provided between the core metal pieces 22 to engage with the teeth of the driving wheel. The core metal pieces have projections 24 which protrude through the body 21 for fast holding. The wheels 18 run on the part of the inner surface of the body 21 outside the projections while the teeth of the driving wheel engage with the sprocket holes 23 and are there pressed against the core metal pieces. The existence of the core metal pieces makes sure positive transmission of driving torque from the driving wheel to the rubber crawler 20.

It has been, however, impossible to mount a rubber crawler such as the one 20 shown in Fig. 3 on a crawling vehicle as shown in Fig. 1. It is desirable to be able to replace the metal crawler of a crawling vehicle as shown in Fig. 1 with a rubber crawler when it moves from a site whereto a metal crawler is suited onto a flat road or a muddy place. To make this replacement of crawlers feasible has also long been strongly requested by users of crawling vehicles. The conventional rubber crawlers, however, cannot be mounted on crawling vehicles equipped with a metal crawler.

SUMMARY OF THE INVENTION

The object of the present invention is to answer the aforementioned request, that is to provide a rubber crawler which can be mounted on a crawling vehicle with a metal crawler in exchange thereof.

In order to attain the aforementioned object, the present invention provides a rubber crawler which comprises an endless belt made of rubber, a number of core metal pieces which extend transversely and are buried in the belt at predetermined intervals longitudinally, a number of sprocket holes provided between said core metal pieces, pairs of projections formed on the core metal pieces to protrude through the inner surface of the belt, and runway pieces with a flat top surface formed on the top of the projections so as to extend longitudinally with respect to the belt for supporting running wheels, said runway pieces being arranged in such manner that the clearance therebetween is less than the diameter of the running wheels anywhere on the elliptic locus defining the inner surface of the belt and yet large enough to keep any adjacent runway pieces from colliding and pushing against each other.

BRIEF DESCRIPTION OF THE DRAWINGS

Fig. 1 is a side elevational view of a conventional crawling vehicle having a metal crawler;

Fig 2 is a plan view seen from inside of the metal crawler;

Fig. 3 is a diagonal view showing a conventional rubber crawler;

Fig. 4 is a diagonal view showing a preferred embodiment of the invention;

Fig. 5 is a sectional view taken at V-V of Fig. 4;

Fig. 6 is a schematic side elevational view showing the clearance between core metal pieces; and

Fig. 7 is a schematic side elevational view showing positional relation between adjacent runway pieces.

DESCRIPTION

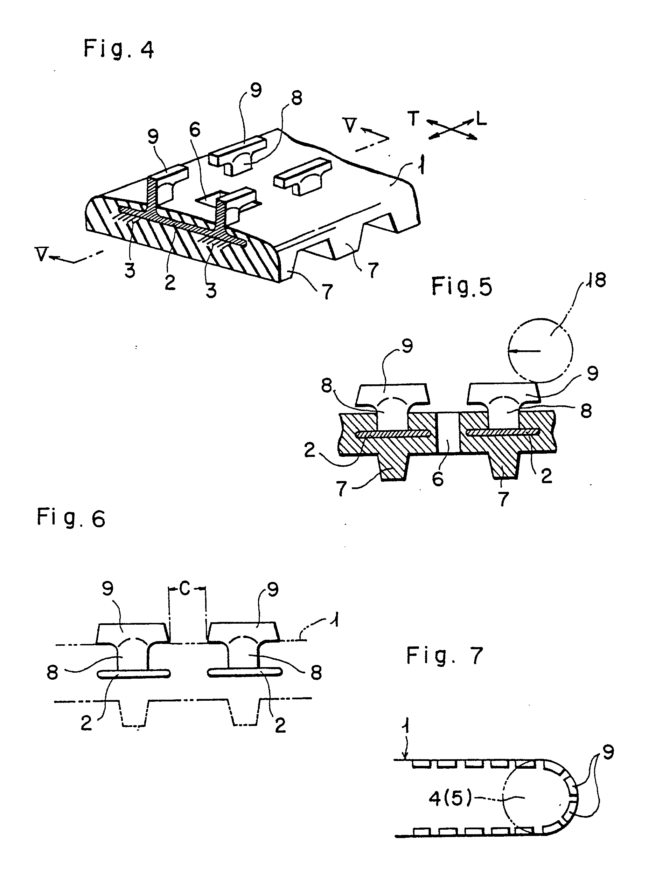

In the following, the present invention shall be described with a preferred embodiment thereof shown in Fig. 4. An endless belt 1 is made of rubber and a number of core metal pieces 2 are buried in said belt 1 at predetermined intervals in the longitudinal direction L of the belt, while each of said metal pieces 2 extends in the belt 1 in the transverse direction T of the belt. Under the core metal pieces 2 are provided in the belt 1 wire bundles 3 to extend longitudinally for reinforcement. Between the core metal pieces 2·2 are provided sprocket holes 6 in which sprocket teeth (not shown) of the driving wheel 4 (see Fig. 7) bite in. On the portions of the outer periphery of the belt 1 where the metal pieces are buried, lugs 7 which contact the ground are formed for enhancing towing performance.

On each of the core metal pieces 2 are formed a pair of projections 8 so as to protrude toward the inner surface of the belt 1, and the top portions thereof are formed into runway pieces 9 with flat top surface which extend in the longitudinal direction L of the belt 1. The core metal pieces 2, the projections 8 and the runway pieces 9 together form a shape of capital letter H lying on its side when seen in a section taken through all of them. The projections 8 may protrude through the inner surface of the belt 1 as shown in Figs. 4 and 5, and also may remain inside the belt with only the runway pieces 9 protruding through the belt 1 as shown in Fig. 6. On the top surfaces of the runway pieces 9 roll the running wheels 18 (see Fig. 5). The clearance C between two longitudinally adjacent runway pieces 9.9 (see Fig. 6) must be less than the diameter of the running wheels 18 and yet it must be large enough to keep the pieces from coming into contact and pushing against each other while the belt 1 makes turns (see Fig. 7). The turning of the belt 1 here means the change of moving direction of the belt portion around the driving wheel 4 or the drived wheel 5 as shown in Fig. 7. Naturally, smooth turning of the belt cannot be expected of the runway pieces 9 collide and push against each other while turning.

As described above, the rubber crawler according to the present invention can be mounted on a crawling vehicle having a conventional metal crawler since, in the rubber crawler, runway pieces are provided at the top of the projections of the core metal pieces protruding toward the inner surface of the belt, which makes it possible to use the metal and rubber crawlers interchangeable. If a crawling vehicle is equipped with the rubber crawler of the invention by replacing a metal crawler, it can run on flat roads without damaging them and can also operate in a muddy site. Further, with a crawling vehicle having a conventional rubber crawler, the rubber crawler according to the present invention can also be used without any inconvenience since the running wheels can run on the part of the inner surface of the belt outside the runway pieces.

**Claim**

A rubber crawler comprising an endless belt (1) made of rubber; a number of core metal pieces (2) buried in said belt in such a manner that they are arranged in the longitudinal direction (L) of the belt at a predetermined interval while each thereof extends transversely; a number of sprocket holes (6) provided between said core metal pieces; pairs of projections (8) formed on each of the core metal pieces to protrude through the inner surface of the belt; characterized in that runway pieces (9) having a flat top surface formed on said projections (8) to extend longitudinally with respect to the belt are provided and that the clearance (C) between adjacent pairs of said runway pieces is less than the diameter of running wheels (18) and yet large enough to keep said runway pieces from colliding and pushing against each other while the belt turns.

**Patentanspruch**

Raupenkette aus Gummi, bestehend aus einem endlosen Band (1) aus Gummi, einer Anzahl von in das Band eingebetteten, sich quer zu diesem erstreckenden, und in vorbestimmtem Abstand in Längsrichtung (L) angeordneten Kernstücken (2) aus Metall, einer Anzahl von Zahnöffnungen (6) zwischen den Kernstücken und paarweise an jedem Kernstück angeordneten, durch die Innenfläche des Bandes hindurchreichenden Vorsprüngen (8), dadurch gekennzeichnet, daß an den Vorsprüngen (8) sich in Längsrichtung des Bandes erstreckende Rollstücke (9) mit ebener Oberfläche angeformt sind und daß der Zwischenraum (C) zwischen benachbarten Rollstückpaaren geringer als der Durchmesser der Laufräder (18), aber groß genug ist, um eine Berührung und ein Aneinanderstoßen der Rollstückpaare während des Bandumlaufs zu verhindern.

**Revendication**

Une chenille en caoutchouc comprenant une courroie sans fin (1) faite en caoutchouc; un certain nombre de pièces métalliques de support (2) noyées dans ladite courroie de telle sorte qu'elles soient disposées dans la direction longitudinale (L) de la courroie à un intervalle prédéterminé tandis que chacune de celles-ci s'étend transversalement; un certain nombre de trous d'engrènement (6) ménagés entre lesdites pièces métalliques de support; des paires de protubérances (8) formées sur chacune des pièces métalliques de support en faisant saillie à travers la surface interne de la courroie; caractérisée en ce que des pièces de chemin de roulement (9) ayant une surface supérieure plate formée sur lesdites protubérances (8) pour s'étendre longitudinalement par rapport à la courroie sont prévues et en ce que l'intervalle (C) entre les paires adjacentes desdites pièces de chemin de roulement est inférieur au diamètre des roues mobiles (18) et cependant assez grand pour empêcher lesdites pièces de chemin de roulement d'entrer en collision et de se pousser mutuellement pendant que la courroie tourne.

Fig. 1

Fig. 2

Fig. 3

Fig. 4

Fig. 5

Fig. 6

Fig. 7